# EUROPEAN PATENT SPECIFICATION

(11) **EP 4 503 299 B1**
(45) Date of publication and mention of the grant of the patent: **02.12.2026**
(21) Application number: 23884431.0
(22) Date of filing: 31.08.2023
(51) Int. Cl.: H01M 10/04, H01M 10/0587, H01M 50/463

(54) **BATTERY CELL**
BATTERIEZELLE
ÉLÉMENT DE BATTERIE

(30) Priority: 31.10.2022 CN 202222878393 U
(43) Date of publication of application: 05.02.2025
(73) Proprietor: Zhuhai CosMX Battery Co., Ltd., Zhuhai, Guangdong 519180 (CN)
(72) Inventor: SHENG, Donghui, Zhuhai, Guangdong 519180 (CN); LIU, Peilun, Zhuhai, Guangdong 519180 (CN); LIU, Chunyu, Zhuhai, Guangdong 519180 (CN); XIE, Jichun, Zhuhai, Guangdong 519180 (CN)
(74) Representative: Murgitroyd & Company
(86) International application number: PCT/CN2023/116186
(87) International publication number: WO 2024/093494

(56) References cited:
- CN-A- 106 571 489
- CN-A- 112 290 130
- CN-A- 112 563 583
- CN-U- 207 967 212
- CN-U- 218 919 208
- JP-A- 2016 012 459
- JP-A- 2020 155 233

## Description

### TECHNICAL FIELD

The present application relates to the field of batteries technologies, and in particular, to a battery cell.

### BACKGROUND

A secondary battery generally includes a battery cell and an outer housing. The battery cell is mainly classified into a stacked type battery cell and a wound type battery cell according to different preparation processes. The wound type battery cell is a flat battery cell made by winding an electrode plate and a separator which are hold by a winding needle adopting a winding process. Manufacturing the wound type battery cell based on a conventional separator has a problem of poor battery cell quality.

CN11290130A discloses a spherical polymer lithium battery and its manufacturing method. The spherical polymer lithium battery includes a semi-elliptical positive electrode sheet, a semi-elliptical negative electrode sheet, an elliptical separator and a spherical aluminum-plastic outer casing. A length of the separator is set to be twice a length of the negative electrode sheet plus an additional 10 mm~20 mm. During winding, the separator is folded in half along its centerline and placed inside, followed by placing the negative electrode sheet and winding it for one turn, then placing the positive electrode sheet and continuing winding. Positive and negative electrode tabs are arranged opposite to each other, oriented 180 degrees apart. The positive electrode sheet, negative electrode sheet and separator are wound to form a spherical core. Finally, the spherical core is placed into the spherical aluminum-plastic outer casing, followed by processes such as sealing, electrolyte injection, formation, degassing, and shaping to produce the spherical polymer lithium battery. The invention is simple and practical to manufacture, providing a power source for electrical devices with spherical battery compartments.

CN106571489A discloses a method for improving separator withdrawal during battery winding, including steps of winding a positive electrode, a separator, and a negative electrode onto a winding pin formed by combining a first half winding pin and a second half winding pin, and withdrawing the first half winding pin and then the second half winding pin after winding is completed. During the winding of the positive electrode, the entering position of the positive electrode is controlled to make a tab thereof located on the side of the second half winding pin, which is withdrawn later.

### SUMMARY

The purpose of the present application is to provide a battery cell for improving battery quality.

Embodiments of the present application provide a battery cell including two electrode plates having opposite polarities and separators disposed between the two electrode plates. The separators and the two electrode plates are disposed in a stacked manner and are winded to form a battery cell. The separator includes: a first section, a second section and a third section which are sequentially arranged along a length direction of the separator, and the first section of the separator is located at a winding head end of the battery cell. A width of the first section is less than a width of the second section, and/or, a width of the third section is less than a width of the second section

It can be learned from the foregoing technical solution that, according to the present application, the separator is divided into areas with different widths to make a width of the area located at a head of the separator and/or a width of the area located at a tail is less than a width of the middle area of the separator. After the width of the head of the separator is narrowed, a contact area between the separator and a winding needle may be reduced, so that a friction force between a surface of the separator and the winding needle is reduced to prevent a portion of the separator from being pulled out of a battery cell when the winding needle is pulled out, and thus a problem of core pulling of the separator is solved. When the width of the tail of the separator is narrowed, that is, a width of an outer circle of the separator is reduced, so that a swing amplitude of the tail of the separator may be reduced at the winding termination of the separator, and thus a problem of wrinkling of the separator at the winding termination of a jellyroll is solved. The quality of a battery may be improved by solving the problem of the core pulling of the separator and/or the problem of the wrinkling of the separator at the winding termination of the jellyroll.

In some optional embodiments, the width of the first section, in an extension direction from an end of the first section away from the second section to an end of the first section close to the second section, is increased gradually; and/or, the width of the third section, in an extension direction from an end of the third section away from the second section to an end of the third section close to the second section, is increased gradually.

In a direction that the first section away from the second section, the first section is arranged to gradually narrow, which not only ensure that the two electrode plates may be isolated from each other, but also reduce the contact area between the separator and the winding needle, so that the friction force between the surface of the separator and the winding needle is reduced, and thus the core pulling of the separator is improved.

In addition, by narrowing a width of the tail of the separator, that is, reducing the width of the outer circle of the separator, so that the swing amplitude of the tail of the separator may be reduced at the winding termination of the separator, and thus the wrinkling of the separator at the winding termination of the jellyroll is improved.

In some optional embodiments, a length w1 of the first section of the separator satisfies: 10%*W≤w1≤3*W, where W is a width of the battery cell.

In some optional embodiments, a length w2 of the third section of the separator satisfies: 10%*W≤w2≤3*W.

In some optional embodiments, a length w2 of the third section of the separator satisfies: 10%*W≤w2≤3*W, where W is a width of the battery cell.

In some optional embodiments, a projection, on a plane where the separator is located, of at least one of the two electrode plates is located in the separator.

In some optional embodiments, on a side of the separator in a width direction of the separator, a distance between an outer edge of the second section of the separator and an outer edge of at least one of the two electrode plates is H, and H is less than or equal to 0.2mm.

In some optional embodiments, on the side of the separator in the width direction of the separator, a distance h1 between an outer edge of the first section of the separator and the outer edge of the two electrode plates satisfy: 3%*H≤h1≤97%*H.

In some optional embodiments, a relationship between a minimum width h2 of the first section and a width h3 of the electrode plate satisfies: 50%*h3<h2<h3+h1.

In some optional embodiments, on the side of the separator in the width direction of the separator, a distance h4 between an outer edge of the third section of the separator and the outer edge of the electrode plate satisfies: 3%*H≤h4≤97%*H.

In some optional embodiments, a relationship between a minimum width h5 of the third section and a width h3 of the electrode plate satisfies: 50%*h3≤h5≤h3+h4.

In some optional embodiments, at least one of the two electrode plates includes an uncovered foil region and a tab disposed on the uncovered foil region. A projection, on a plane where the separator is located, of a portion of the tab on the electrode plate is located in the first section.

In some optional embodiments, the two electrode plates include a first electrode plate and a second electrode plate, and the separators includes a first separator and a second separator which are located at two opposite sides of the first electrode plate. The first separator and the second separator cover the first electrode plate, and the first separator, the first electrode plate and the second separator are bonded together.

In some optional embodiments of the application, lengths of the first separator and the second separator are the same.

### BRIEF DESCRIPTION OF THE DRAWINGS

In order to more clearly illustrate the embodiments of the present application, the drawings to be used in the description of the embodiments or conventional art will be briefly introduced below, and it is obvious that the drawings in the following description are merely some of the embodiments of the present application. For a person skilled in the art, other drawings may be obtained based on these drawings without creative labor.
FIG. 1 shows a schematic structural diagram of a wound type battery cell provided in an embodiment of the present application.
FIG. 2 shows a schematic diagram of core pulling of a wound type battery cell provided in an embodiment of the present application.
FIG. 3 shows a schematic structural diagram of a separator provided in an embodiment of the present application.
FIG. 4 shows a schematic diagram of separators and electrode plates disposed in a stacked manner provided in an embodiment of the present application.
FIG. 5 shows a schematic diagram of electrode plates and separators disposed in a stacked manner provided in another embodiment of the present application.

Specific implementation modes of the present application are described in further detail below with reference to the drawings.

### DETAILED DESCRIPTION OF THE EMBODIMENTS

The present application will be described in detail below with reference to the drawings. When the embodiments of the present application are described in detail, for ease of explanation, the drawings representing a structure of a device will not be locally enlarged according to general proportion, and the schematic diagrams are merely examples, which should not limit the protection scope of the present application. It should be noted that the drawings are adopted a simplified form and are all use non-precise proportions, and are used only for the purpose of conveniently and clearly assisting in the illustration of the embodiments of the present application. In addition, in the description of the present application, terms "first", "second" and the like are only used to distinguish the description, and cannot be understood as indicating or implying relative importance or implicitly indicating the number of indicated technical features. Orientations or positional relationships indicated by terms "positive", "reverse", "bottom", "upper", "lower" and the like are the orientations or positional relationships based on the orientations or positional relationships shown in the drawings, which are merely intended to facilitate describing the present application and simplify the description, rather than indicating or implying that the device or element referred to must have a particular orientation, or be constructed and operated in a particular orientation, therefore cannot be understood as a limitation to the present application.

In the description of the present application, it should be noted that, unless expressly specified and limited otherwise, terms "connected" and "connect" should be understood in a broad sense, for example, the connection may be fixed, detachable or integral connection; it may be mechanical or electrical connection; it may be a direct connection, an indirect connection through an intermediate medium, or it may be communication inside two elements; it may be wireless connection or wired connection. For a person skilled in the art, the specific meaning of the above-mentioned terms in present application may be understood according to a specific case.

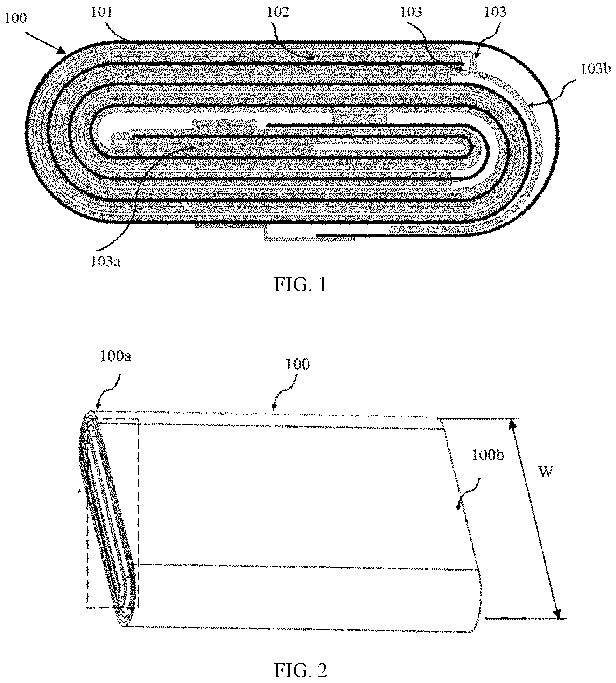

FIG. 1 and FIG. 2 are schematic structural diagrams of a battery cell made by a winding process. As shown in FIG. 1 and FIG. 2, a wound type battery cell 100 is formed by winding a positive electrode plate 101, a negative electrode plate 102, and a separator 103. The separator 103 is disposed between the positive electrode plate 101 and the negative electrode plate 102 to separate the positive electrode plate 101 from the negative electrode plate 102. Positive tabs (not labeled) and negative tabs (not labeled) are disposed on the positive electrode plate 101 and the negative electrode plate 102, respectively. During winding, a head 103a the separator 103 is bent and overlapped, and is located in the innermost layer of the wound type battery cell 100. The wound type battery cell 100 has a head 100a and a tail 100b, and a winding needle is pulled out from a side where the head 100a of the wound type battery cell 100 is located after winding is completed. The separator 103 in the wound type battery cell is located at the innermost layer of the battery cell, and a winding needle holds the separator and drives the electrode plate to wind together through the separator during winding. Since the separator 103 has a portion which is in direct contact with the winding needle, there is a friction force between a surface coating of the portion of the separator and the winding needle. After the winding is completed, during a process that the winding needle is pulled out, the winding needle is easily pulled out together with the separator in an inner layer, so that a portion of the separator is pulled out of the battery cell, and thus resulting in a phenomenon of core pulling. For example, the separator is partially pulled out of the head of the battery cell (as a portion within a dashed box shown in FIG. 2). When the separator is pulled out, it will affect the mutual isolation between the positive electrode plate 101 and the negative electrode plate 102, which may cause the positive and negative electrode plates being in contact with each other to generate a short circuit, and even cause the core being scrapped, so that a product yield is reduced. In addition, for some wound type battery cells ending with the separator, since a width of the separator is wider and texture is softer, the tail of the separator 103b is easily wrinkled during winding termination, resulting in an increase in a thickness of the wound type battery cell, thereby an energy density of the battery is affected.

A wound type battery cell is a battery cell made by a winding process, the wound type battery cell includes two electrode plates with opposite polarities, and a separator is located between the two electrode plates. During winding, the winding needle holds the separator and the electrode plates disposed in the stacked manner to be winded together to form the battery cell. For ease of explanation, an end of the separator 103 located at the innermost layer of the battery cell is defined as the head of the separator, and the other end of the separator opposite to the head is the tail of the separator. In some winding processes, the separator is used for winding termination, that is, the tail of the separator will be wrapped outside the outermost layer of the battery cell. The innermost layer of the battery cell is also a winding head end of the battery cell.

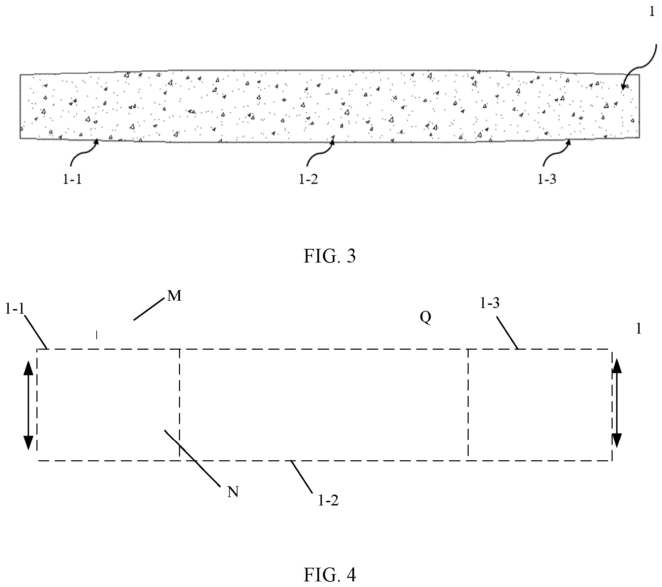

A separator is generally in a rectangular structure, a size of a long edge of a rectangle is defined as a length of the separator, and a size of a short edge of the rectangle is defined as a width of the separator. As shown in FIG. 3 and FIG. 4, an embodiment of the present application provides a separator 1. The separator 1 includes a first section 1-1, a second section 1-2 and a third section 1-3 which are sequentially arranged along a length direction of the separator 1. The first section 1-1 is located on a side of a head of the separator, that is, during winding, the first section 1-1 is located at a winding head end of a battery cell, that is, it is located in an inner layer of the battery cell. The third section 1-3 is located on a side of a tail of the separator, that is, during winding, the third section 1-3 is located on an outer layer of the battery cell. A width of the first section 1-1 is less than a width of the second section 1-2, and/or a width of the third section 1-3 is less than a width of the second section 1-2, so that the separator has a shape with an end portion narrower than a middle portion thereof.

In some embodiments, the width of the first section 1-1 and the width of the third section 1-3 are both less than the width of the second section 1-2, and the width of the first section 1-1 is increased gradually in an extension direction from an end of the first section 1-1 away from the second section 1-2 to an end of the first section 1-1 close to the second section 1-2, that is, the first section 1-1 is increasingly narrower in a direction the first section 1-1 away from the second section 1-2; and/or, the width of the third section 1-3 is also increased gradually in an extension direction from an end of the third section 1-3 away from the second section 1-2 to an end of the third section 1-3 close to the second section 1-2, that is, the third section 1-3 is increasingly narrower in a direction the third section 1-3 away from the second section 1-2. In order to ensure that the positive and negative electrode plates are separated, a width of a narrowest position of the separator 1, that is, a minimum width of the separator 1 is greater than a width of the electrode plate (positive and/or negative electrode plate). That is, when the electrode plate and the separator are flattened and stacked together, a projection, on a plane where the separator is located, of the electrode plate is located in the separator (as shown in FIG. 4). In this way, it may be ensured that when the separator and the electrode plate are disposed in the stacked manner or winded, the separator is capable of completely covering the electrode plate, and thereby the electrode plates with opposite polarities separated by the separator are prevented from contacting each other.

In the present application, by dividing the separator into areas with different widths, the width of the area (the first section) located at the head of a separator and/or the area (the third section) located at the tail of the separator is less than the width of the middle position of the separator. The width of the head of the separator is narrowed, so that a contact area of the separator and the winding needle may be reduced, and thereby a friction force between a surface of the separator and the winding needle is reduced, which prevents a portion of the separator from being pulled out of the battery cell when the winding needle is pulled out, and thus the problem of core pulling of the separator is solved. In some embodiments, a width of a tail area of a separator is also less than a width of other portions of the separator, so that a swing amplitude of the tail of the separator may be reduced at the winding termination of the separator, and thus wrinkling of the separator at the winding termination of a jellyroll is improved.

An embodiment of present application further provides a battery cell, including two electrode plates with opposite polarities and separators located between the two electrode plates, and the separators and the two electrode plates are disposed in a stacked manner and winded to form the battery cell. The separator may be the separator according to any one of the foregoing embodiments, and the first section of the separator is located at a winding head end of the battery cell.

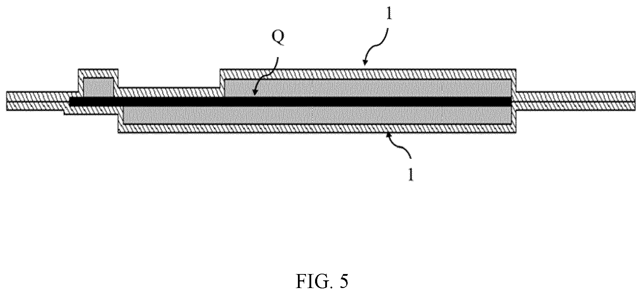

In some embodiments, the battery cell includes a first electrode plate and a second electrode plate with opposite polarities, the separators include a first separator and a second separator located on two opposite sides of the first electrode plate, and the first separator and the second separator cover the first electrode plate. As shown in FIG. 5, as an optional implementation of the present application, before winding the first electrode plate, the second electrode plate and the first and second separators, the first electrode plate and the first and second separators located on surfaces of two sides of the first electrode plate may be laminated and bonded together, and then the first electrode plate laminated with the separators and the second electrode plate are stacked for winding. In some optional embodiments, the first separator and the second separator respectively located on two opposite sides of the first electrode plate are equal in length, and adopting the two separators with the same length may avoid dislocation during winding.

As shown in FIG. 4, the separator 1 is longer than an electrode plate Q, and is also wider than the electrode plate Q, and the separator 1 exceeds the electrode plate Q in a length direction and a width direction. In some embodiments, in a width direction of the separator, a distance between an outer edge of a second section 1-2 of the separator 1 and an outer edge of the electrode plate Q on the same side is H, where H≥0.2mm. That is, in the width direction, sizes that two sides of the separator 1 at the second section 1-2 exceed the electrode plate Q are H, respectively. That is, the two sides of the separator 1 at the second section 1-2 respectively exceed the electrode plate 0.2 mm.

A length w1 of the first section 1-1 of the separator 1 satisfies: 10%*W≤w1≤3*W, where W is a width of a battery cell. In the width direction of the separator 1, a distance between an outer edge of the first section 1-1 and an outer edge of the electrode plate Q on the same side is h1, and 3%*H≤h1≤97%*H. That is, on one side in the width direction, the first section 1-1 of the separator 1 exceeds at least h1 beyond the electrode plate. When the width of the first section 1-1 decreases gradually in a direction the first section 1-1 away from the second section 1-2, the h1 is a value range rather than a constant value. When the first section 1-1 is a square region with a constant width, the h1 is a constant value. A relationship between a minimum width value h2 of the first section 1-1 and a width h3 of the electrode plate Q also satisfies: 50%*h3≤h2≤h3+h1, where the h3 in the formula is a width of the electrode plate.

A length w2 of a third section 1-3 of the separator 1 satisfies: 10%*W≤w2≤3*W. In the width direction, a distance between an outer edge of the third section 1-3 and an outer edge of the electrode plate Q on the same side is h4, and 3%*H≤h4≤97%*H. That is, in the width direction, sizes that the two sides of the separator 1 at the third section 1-3 exceed a size of the electrode plate Q are h4, respectively. Similarly, when the width of the third section 1-3 decreases gradually in a direction the third section 1-3 away from the second section 1-2, the h4 is a value range rather than a constant value. When the third section 1-3 is a square area with a constant width, the h4 is a constant value. A relationship between a minimum width value h5 of the third section 1-3 and a width h3 of the electrode plate Q also satisfy: 50%*h3≤h5≤h3+h4.

As shown in FIG. 4, the electrode plate Q has an uncovered foil region N which is uncoated with an active material, and the uncovered foil region N is used for welding a tab M. The tab M is disposed in the uncovered foil region N of the electrode plate Q, and extends beyond the electrode plate Q in the width direction of the separator 1. After the tab M is disposed on the electrode plate Q, a projection of a portion of the tab M on the electrode plate Q (a part of the tab that does not extend beyond the electrode plate) on a plane where the separator 1 is located is located in the first section 1-1 of the separator 1. That is, a projection of the uncovered foil region N of the electrode plate Q on the plane where the separator 1 is located is located in the first section 1-1 of the separator 1.

## Claims

1. A battery cell, comprising: two electrode plates having opposite polarities and separators (1) disposed between the two electrode plates, the separators (1) and the two electrode plates being disposed in a stacked manner and being winded to form the battery cell, wherein the separator (1), comprising:
a first section (1-1), a second section (1-2), and a third section (1-3) which are sequentially arranged along a length direction of the separator (1), wherein the first section (1-1) of the separator (1) is located at a winding head end of the battery cell, and
a width of the first section (1-1) is less than a width of the second section (1-2); and/or,
a width of the third section (1-3) is less than a width of the second section (1-2).

2. The battery cell according to claim 1, wherein the width of the first section (1-1), in an extension direction from an end of the first section (1-1) away from the second section (1-2) to an end of the first section (1-1) close to the second section (1-2), is increased gradually; and/or
the width of the third section (1-3), in an extension direction from an end of the third section (1-3) away from the second section (1-2) to an end of the third section (1-3) close to the second section (1-2), is increased gradually.

3. The battery cell according to claim 1 or claim 2, wherein a length w1 of the first section (1) of the separator (1) satisfies: 10%*W≤w1≤3*W, wherein W is a width of the battery cell.

4. The battery cell according to claim 3, wherein a length w2 of the third section (1-3) of the separator (1) satisfies: 10%*W≤w2≤3*W.

5. The battery cell according to any one of claims 1 to 4, wherein a projection, on a plane where the separator (1) is located, of at least one of the two electrode plates is located in the separator (1).

6. The battery cell according to any one of claims 1 to 5, wherein on a side of the separator (1) in a width direction of the separator (1), a distance between an outer edge of the second section (1-2) of the separator (1) and an outer edge of at least one of the two electrode plates is H, and H is less than or equal to 0.2mm.

7. The battery cell according to claim 6, wherein on the side of the separator (1) in the width direction of the separator (1), a distance h1 between an outer edge of the first section (1-1) and the outer edge of the electrode plate satisfy: 3%*H≤h1≤97%*H.

8. The battery cell according to claim 7, wherein a relationship between a minimum width h2 of the first section (1-1) and a width h3 of the electrode plate satisfies: 50%*h3≤h2≤h3+h1.

9. The battery cell according to any one of claims 6 to 8, wherein on the side of the separator (1) in the width direction of the separator (1), a distance h4 between an outer edge of the third section (1-3) of the separator (1) and the outer edge of the electrode plate satisfies: 3%*H≤h4≤97%*H.

10. The battery cell according to claim 9, wherein a relationship between a minimum width h5 of the third section (1-3) and a width h3 of the electrode plate satisfies: 50%*h3≤h5≤h3+h4.

11. The battery cell according to any one of claims 1 to 10, wherein,
at least one of the two electrode plates comprises an uncovered foil region and a tab disposed on the uncovered foil region, and a projection on a plane where the separator (1) is located, of a portion of the tab on the electrode plate is located in the first section (1-1).

12. The battery cell according to any one of claims 1 to 11, wherein the two electrode plates comprise a first electrode plate and a second electrode plate, the separators (1) comprise a first separator and a second separator which are located at two opposite sides of the first electrode plate, the first separator and the second separator cover the first electrode plate, and the first separator, the first electrode plate and the second separator are bonded together.

13. The battery cell according to claim 12, wherein lengths of the first separator and the second separator are the same.

## Patentansprüche

1. Eine Batteriezelle, die Folgendes beinhaltet: zwei Elektrodenplatten mit entgegengesetzten Polaritäten und Separatoren (1), die zwischen den zwei Elektrodenplatten angeordnet sind, wobei die Separatoren (1) und die zwei Elektrodenplatten in einer gestapelten Weise angeordnet sind und gewickelt sind, um die Batteriezelle zu bilden, wobei der Separator (1) Folgendes beinhaltet:
einen ersten Abschnitt (1-1), einen zweiten Abschnitt (1-2) und einen dritten Abschnitt (1-3), die nacheinander entlang einer Längsrichtung des Separators (1) eingerichtet sind, wobei sich der erste Abschnitt (1-1) des Separators (1) an einem Wickelkopfende der Batteriezelle befindet und eine Breite des ersten Abschnitts (1-1) kleiner als eine Breite des zweiten Abschnitts (1-2) ist; und/oder
eine Breite des dritten Abschnitts (1-3) kleiner als eine Breite des zweiten Abschnitts (1-2) ist.

2. Batteriezelle gemäß Anspruch 1, wobei die Breite des ersten Abschnitts (1-1) in einer Erstreckungsrichtung von einem Ende des ersten Abschnitts (1-1) weg von dem zweiten Abschnitt (1-2) zu einem Ende des ersten Abschnitts (1-1) nahe dem zweiten Abschnitt (1-2) allmählich zunimmt; und/oder
die Breite des dritten Abschnitts (1-3) in einer Erstreckungsrichtung von einem Ende des dritten Abschnitts (1-3) weg von dem zweiten Abschnitt (1-2) zu einem Ende des dritten Abschnitts (1-3) nahe dem zweiten Abschnitt (1-2) allmählich zunimmt.

3. Batteriezelle gemäß Anspruch 1 oder Anspruch 2, wobei eine Länge w1 des ersten Abschnitts (1) des Separators (1) Folgendes erfüllt: 10%*W≤w1≤3*W, wobei W eine Breite der Batteriezelle ist.

4. Batteriezelle gemäß Anspruch 3, wobei eine Länge w2 des dritten Abschnitts (1-3) des Separators (1) Folgendes erfüllt: 10%*W≤w2≤3*W.

5. Batteriezelle gemäß einem der Ansprüche 1 bis 4, wobei sich ein Vorsprung, auf einer Ebene, auf der sich der Separator (1) befindet, von mindestens einer der zwei Elektrodenplatten in dem Separator (1) befindet.

6. Batteriezelle gemäß einem der Ansprüche 1 bis 5, wobei auf einer Seite des Separators (1) in einer Breitenrichtung des Separators (1) ein Abstand zwischen einer Außenkante des zweiten Abschnitts (1-2) des Separators (1) und einer Außenkante von mindestens einer der zwei Elektrodenplatten H ist und H kleiner als oder gleich 0,2 mm ist.

7. Batteriezelle gemäß Anspruch 6, wobei auf der Seite des Separators (1) in der Breitenrichtung des Separators (1) ein Abstand h1 zwischen einer Außenkante des ersten Abschnitts (1-1) und der Außenkante der Elektrodenplatte Folgendes erfüllt: 3%*H≤h1≤97%*H.

8. Batteriezelle gemäß Anspruch 7, wobei eine Beziehung zwischen einer minimalen Breite h2 des ersten Abschnitts (1-1) und einer Breite h3 der Elektrodenplatte Folgendes erfüllt: 50%*h3≤h2≤h3+h1.

9. Batteriezelle gemäß einem der Ansprüche 6 bis 8, wobei auf der Seite des Separators (1) in der Breitenrichtung des Separators (1) ein Abstand h4 zwischen einer Außenkante des dritten Abschnitts (1-3) des Separators (1) und der Außenkante der Elektrodenplatte Folgendes erfüllt: 3%*H≤h4≤97%*H.

10. Batteriezelle gemäß Anspruch 9, wobei eine Beziehung zwischen einer minimalen Breite h5 des dritten Abschnitts (1-3) und einer Breite h3 der Elektrodenplatte Folgendes erfüllt: 50%*h3≤h5≤h3+h4.

11. Batteriezelle gemäß einem der Ansprüche 1 bis 10, wobei
mindestens eine der zwei Elektrodenplatten einen unbedeckten Folienbereich und eine Lasche, die auf dem unbedeckten Folienbereich angeordnet ist, beinhaltet und sich ein Vorsprung, auf einer Ebene, auf der sich der Separator (1) befindet, eines Abschnitts der Lasche auf der Elektrodenplatte in dem ersten Abschnitt (1-1) befindet.

12. Batteriezelle gemäß einem der Ansprüche 1 bis 11, wobei die zwei Elektrodenplatten eine erste Elektrodenplatte und eine zweite Elektrodenplatte beinhalten, die Separatoren (1) einen ersten Separator und einen zweiten Separator beinhalten, die sich an zwei gegenüberliegenden Seiten der ersten Elektrodenplatte befinden, der erste Separator und der zweite Separator die erste Elektrodenplatte bedecken und der erste Separator, die erste Elektrodenplatte und der zweite Separator miteinander verbunden sind.

13. Batteriezelle gemäß Anspruch 12, wobei Längen des ersten Separators und des zweiten Separators gleich sind.

## Revendications

1. Une cellule de batterie, comprenant : deux plaques d'électrode ayant des polarités opposées et des séparateurs (1) disposés entre les deux plaques d'électrode, les séparateurs (1) et les deux plaques d'électrode étant disposés de manière empilée et étant enroulés pour former la cellule de batterie, dans laquelle le séparateur (1) comprend :
une première section (1-1), une deuxième section (1-2), et une troisième section (1-3) qui sont agencées séquentiellement le long d'une direction de longueur du séparateur (1), la première section (1-1) du séparateur (1) étant située au niveau d'une extrémité de tête d'enroulement de la cellule de batterie, et une largeur de la première section (1-1) étant inférieure à une largeur de la deuxième section (1-2) ; et/ou,
une largeur de la troisième section (1-3) étant inférieure à une largeur de la deuxième section (1-2).

2. La cellule de batterie selon la revendication 1, dans laquelle la largeur de la première section (1-1), dans une direction d'extension depuis une extrémité de la première section (1-1) éloignée de la deuxième section (1-2) jusqu'à une extrémité de la première section (1-1) proche de la deuxième section (1-2), est augmentée progressivement ; et/ou
la largeur de la troisième section (1-3), dans une direction d'extension depuis une extrémité de la troisième section (1-3) éloignée de la deuxième section (1-2) jusqu'à une extrémité de la troisième section (1-3) proche de la deuxième section (1-2), est augmentée progressivement.

3. La cellule de batterie selon la revendication 1 ou la revendication 2, dans laquelle une longueur w1 de la première section (1) du séparateur (1) satisfait à : 10%*W≤w1≤3*W, W étant une largeur de la cellule de batterie.

4. La cellule de batterie selon la revendication 3, dans laquelle une longueur w2 de la troisième section (1-3) du séparateur (1) satisfait à : 10%*W≤w2≤3*W.

5. La cellule de batterie selon l'une quelconque des revendications 1 à 4, dans laquelle une projection, sur un plan où le séparateur (1) est situé, d'au moins une des deux plaques d'électrode, est située dans le séparateur (1).

6. La cellule de batterie selon l'une quelconque des revendications 1 à 5, dans laquelle sur un côté du séparateur (1) dans une direction de largeur du séparateur (1), une distance entre un bord externe de la deuxième section (1-2) du séparateur (1) et un bord externe d'au moins une des deux plaques d'électrode est H, et H est inférieure ou égale à 0,2 mm.

7. La cellule de batterie selon la revendication 6, dans laquelle sur le côté du séparateur (1) dans la direction de largeur du séparateur (1), une distance h1 entre un bord externe de la première section (1-1) et le bord externe de la plaque d'électrode satisfait à : 3%*H≤h1≤97%*H.

8. La cellule de batterie selon la revendication 7, dans laquelle une relation entre une largeur minimale h2 de la première section (1-1) et une largeur h3 de la plaque d'électrode satisfait à : 50%*h3≤h2≤h3+h1.

9. La cellule de batterie selon l'une quelconque des revendications 6 à 8, dans laquelle sur le côté du séparateur (1) dans la direction de largeur du séparateur (1), une distance h4 entre un bord externe de la troisième section (1-3) du séparateur (1) et le bord externe de la plaque d'électrode satisfait à : 3%*H≤h4≤97%*H.

10. La cellule de batterie selon la revendication 9, dans laquelle une relation entre une largeur minimale h5 de la troisième section (1-3) et une largeur h3 de la plaque d'électrode satisfait à : 50%*h3≤h5≤h3+h4.

11. La cellule de batterie selon l'une quelconque des revendications 1 à 10, dans laquelle, au moins une des deux plaques d'électrode comprend une région de feuille non couverte et une languette disposée sur la région de feuille non couverte, et une projection, sur un plan où le séparateur (1) est situé, d'une portion de la languette sur la plaque d'électrode, est située dans la première section (1-1).

12. La cellule de batterie selon l'une quelconque des revendications 1 à 11, dans laquelle les deux plaques d'électrode comprennent une première plaque d'électrode et une deuxième plaque d'électrode, les séparateurs (1) comprennent un premier séparateur et un deuxième séparateur qui sont situés au niveau de deux côtés opposés de la première plaque d'électrode, le premier séparateur et le deuxième séparateur couvrent la première plaque d'électrode, et le premier séparateur, la première plaque d'électrode et le deuxième séparateur sont liés ensemble.

13. La cellule de batterie selon la revendication 12, dans laquelle des longueurs du premier séparateur et du deuxième séparateur sont les mêmes.
